(19) Europäisches Patentamt
European Patent Office
Office européen des brevets

(11) **EP 4 453 902 B1**

(12) **EUROPÄISCHE PATENTSCHRIFT**

(45) Veröffentlichungstag und Bekanntmachung des Hinweises auf die Patenterteilung:
**24.09.2025 Patentblatt 2025/39**

(21) Anmeldenummer: **22835060.9**

(22) Anmeldetag: **15.12.2022**

(51) Internationale Patentklassifikation (IPC):
*G06V 10/778* (2022.01)    *G06K 7/14* (2006.01)
*G06K 7/10* (2006.01)    *G06V 20/68* (2022.01)
*G06N 3/0464* (2023.01)    *G06N 3/084* (2023.01)
*G06N 3/09* (2023.01)    *G06V 10/24* (2022.01)
*G06V 10/774* (2022.01)    *G06V 10/82* (2022.01)

(52) Gemeinsame Patentklassifikation (CPC):
**G06V 20/68; G06K 7/10861; G06K 7/1482;**
**G06N 3/0464; G06N 3/084; G06N 3/09;**
**G06V 10/243; G06V 10/774; G06V 10/778;**
**G06V 10/82;** G06N 3/045; G06N 3/0475;
G06N 3/092

(86) Internationale Anmeldenummer:
**PCT/EP2022/086139**

(87) Internationale Veröffentlichungsnummer:
**WO 2023/117687 (29.06.2023 Gazette 2023/26)**

(54) **AUSLESEN VON OPTISCH LESBAREN CODES**

READING OF OPTICALLY READABLE CODES

LECTURE DE CODES À LECTURE OPTIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **22.12.2021 EP 21216812**
**22.12.2021 EP 21216923**
**10.02.2022 EP 22156217**

(43) Veröffentlichungstag der Anmeldung:
**30.10.2024 Patentblatt 2024/44**

(73) Patentinhaber: **Bayer Aktiengesellschaft**
**51373 Leverkusen (DE)**

(72) Erfinder:
• **SCHAEFER, Dirk**
**51373 Leverkusen (DE)**
• **HOETTER, Benjamin**
**51491 Overath (DE)**
• **FISCHER, Gregor**
**51491 Overath (DE)**
• **RUELBERG, Klaus**
**51491 Overath (DE)**

(74) Vertreter: **BIP Patents**
**c/o Bayer Intellectual Property GmbH**
**Alfred-Nobel-Straße 50**
**40789 Monheim am Rhein (DE)**

(56) Entgegenhaltungen:
EP-A1- 3 640 901    WO-A1-2019/145390
WO-A1-2020/119301    GB-A- 2 585 938
US-A1- 2012 211 555    US-A1- 2020 175 317
US-A1- 2021 012 076

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung befasst sich mit dem technischen Gebiet der Kennzeichnung von Gegenständen mit optisch lesbaren Codes und dem Auslesen der Codes. Gegenstände der vorliegenden Erfindung sind ein Verfahren, ein System und ein Computerprogrammprodukt zum Erfassen und Interpretieren von optisch lesbaren Codes, die in Oberflächen von Gegenständen eingebracht sind.

GB2585938A offenbart ein Erkennungsgerät und -verfahren. WO2020119301A1 offenbart Verfahren, Apparat und Vorrichtung zur Identifizierung eines zweidimensionalen Codes.

Die Verfolgung von Gütern und Waren spielt in vielen Bereichen der Wirtschaft eine wichtige Rolle. Waren und Güter bzw. deren Verpackungen und/oder Behälter werden mit einer eindeutigen Kennung (z.B. einer Seriennummer) versehen (Serialisierung), um sie entlang ihrer Lieferkette verfolgen und Wareneingänge und -ausgänge maschinell erfassen zu können.

In vielen Fällen ist die Kennung in einer optisch lesbaren Form, z.B. in Form eines Strichcodes (z.B. EAN-8-Barcode) oder eines Matrixcodes (z.B. QR-Code) auf den Waren und Gütern bzw. deren Verpackungen und/oder Behältern aufgebracht (siehe z.B. EP3640901A1). Hinter dem Strich- oder Matrixcode verbirgt sich oft eine Seriennummer, die üblicherweise Auskunft über Art der Ware oder des Gutes und über die Herkunft liefert.

Bei manchen pharmazeutischen Produkten ist sogar eine individuelle Kennzeichnung von Einzelpackungen erforderlich. Gemäß Art. 54a Abs. 1 der durch die sog. EU-Fälschungsschutzrichtlinie 2011/62/EU (FMD) geänderten Richtlinie 2001/83/EG sind zumindest verschreibungspflichtige Arzneimittel mit einem individuellen Erkennungsmerkmal (engl.: *Unique Identifier*) zu kennzeichnen, das insbesondere eine Überprüfung der Echtheit und die Identifizierung von Einzelpackungen ermöglicht.

Pflanzliche und tierische Erzeugnisse werden üblicherweise lediglich mit einem Seriencode versehen. Bei pflanzlichen und tierischen Erzeugnissen wird eine Kennzeichnung üblicherweise auf eine Verpackung und/oder einen Behälter zum Beispiel in Form von Aufklebern oder Aufdrucken aufgebracht bzw. angebracht.

In manchen Fällen werden Kennungen auch direkt auf pflanzliche oder tierische Erzeugnisse aufgebracht. Eier werden beispielsweise in der Europäischen Union mit einem Erzeugercode versehen, aus dem die Haltungsform des Huhns, das Land, aus dem das Ei stammt, und der Betrieb, aus dem das Ei stammt, abgeleitet werden kann. Zunehmend werden auch die Schale von Obst- und Gemüseeinheiten mit einer Kennzeichnung versehen (siehe z.B.: E. Etxeberria et al: Anatomical and Morphological Characteristics of Laser Etching Depressions for Fruit Labeling, 2006, HortTechnology. 16, 10.21273/HORTTECH.16.3.0527).

Verbraucher zeigen ein zunehmendes Interesse an der Herkunft und der Lieferkette von pflanzlichen und tierischen Erzeugnissen. Sie wollen beispielsweise wissen, woher das jeweilige Erzeugnis stammt, ob und wie es behandelt wurde (z.B. mit Pflanzenschutzmitteln), wie lange der Transport gedauert hat, welche Bedingungen während des Transports geherrscht haben und/oder dergleichen.

In EP3896629A1 wird vorgeschlagen, pflanzliche und tierische Erzeugnisse mit einer individuellen Kennung in Form eines optisch lesbaren Codes zu versehen. Der Code kann von einem Verbraucher beispielsweise mittels der Kamera seines Smartphones gelesen werden. Anhand des ausgelesenen Codes können dem Verbraucher verschiedene Informationen zu dem pflanzlichen oder tierischen Erzeugnis angezeigt werden. EP3896629A1 schlägt vor, den optisch lesbaren Code beispielsweise mittels eines Lasers in eine Oberfläche des pflanzlichen oder tierischen Erzeugnisses einzubringen. Ein in die Oberfläche eines pflanzlichen oder tierischen Erzeugnisses eingebrachter optischer Code weist einen geringeren Kontrast gegenüber dem umliegenden Gewebe auf und ist damit schwieriger auszulesen als beispielsweise ein mit schwarzer Farbe auf weißem Hintergrund aufgebrachter optischer Code, wie er üblicherweise bei Aufklebern oder Anhängern vorliegt. Ferner weisen optische Codes auf unterschiedlichen Gegenständen ein unterschiedliches Erscheinungsbild auf. Werden optisch lesbare Codes mittels eines Lasers beispielsweise auf gekrümmten Oberflächen, wie sie bei vielen Früchten und Gemüsesorten vorliegen, aufgebracht, kann es zu einer Verzerrung der Codes kommen, die ein Auslesen erschwert. Werden optisch lesbare Codes auf glatte Oberflächen aufgebracht, können beim Auslesen Reflexionen (z.B. durch Umgebungslicht) auf der Oberfläche auftreten, die ein Auslesen erschweren. Oberflächen von Früchten und Gemüsen können uneinheitlich sein, z.B. können Äpfel Stippen und Flecken aufweisen. Kartoffeln können Unebenheiten aufweisen. Solche Uneinheitlichkeiten und Unebenheiten können ein Auslesen von Codes erschweren.

Es stellt sich damit die Aufgabe, Mittel bereitzustellen, mit denen optisch lesbare Codes auf einer Vielzahl von verschiedenen Gegenständen, insbesondere auf einer Vielzahl von pflanzlichen und tierischen Erzeugnissen, von einem Verbraucher mit einfachen Mitteln, wie beispielweise einem Smartphone, zuverlässig ausgelesen werden können.

Diese Aufgabe wird durch die Gegenstände der unabhängigen Patentansprüche gelöst. Bevorzugte Ausführungsformen finden sich in den abhängigen Patentansprüchen, der vorliegenden Beschreibung und in den Zeichnungen.

Ein erster Gegenstand der vorliegenden Erfindung ist ein computer-implementiertes Verfahren zum Auslesen eines optisch lesbaren Codes, der in eine Oberfläche eines Gegenstands eingebracht ist, umfassend die Schritte

- Empfangen einer ersten Bildaufnahme von dem Gegenstand,

- Identifizieren des Gegenstands auf Basis der ersten Bildaufnahme,

- Auslesen von Transformationsparametern für den identifizierten Gegenstand aus einer Datenbank,

- Transformieren der ersten Bildaufnahme und/oder einer zweiten Bildaufnahme des Gegenstands auf Basis der Transformationsparameter, wobei eine transformierte Bildaufnahme erhalten wird, wobei das Transformieren der ersten Bildaufnahme und/oder der zweiten Bildaufnahme ein oder mehrere der folgenden Schritte umfasst:

  ◦ Reduzieren von Verzerrungen und/oder Verzeichnungen des in der ersten und/oder zweiten Bildaufnahme abgebildeten optisch lesbaren Codes,

  ◦ Reduzieren von Reflexionen in der ersten und/oder zweiten Bildaufnahme,

  ◦ Erhöhen des Kontrasts des in der ersten und/oder zweiten Bildaufnahme abgebildeten optisch lesbaren Codes gegenüber der Umgebung des optisch lesbaren Codes,

- Dekodieren des in der transformierten Bildaufnahme abgebildeten optisch lesbaren Codes, wobei die Transformationsparameter empirisch ermittelt wurden, wobei bei der empirischen Ermittlung diejenigen Transformationsparameter ausgewählt wurden, bei denen das Auslesen eines optisch lesbaren Codes in einer transformierten Bildaufnahme zu weniger Dekodierfehlern führt, als das Auslesen des optisch lesbaren Codes in der nicht-transformierten Bildaufnahme.

Ein weiterer Gegenstand der vorliegenden Erfindung ist ein System umfassend mindestens einen Prozessor, wobei der Prozessor konfiguriert ist,

- eine erste Bildaufnahme von einem Gegenstand zu empfangen, wobei der Gegenstand einen optisch lesbaren Code umfasst, wobei der optisch lesbare Code in eine Oberfläche des Gegenstands eingebracht ist,

- den Gegenstand, der in einer ersten Bildaufnahme abgebildet ist, zu identifizieren,

- aus einer Datenbank Transformationsparameter für den identifizierten Gegenstand auszulesen,

- die erste Bildaufnahme und/oder eine zweite Bildaufnahme des Gegenstands gemäß den Transformationsparametern zu transformieren, wobei eine transformierte Bildaufnahme erhalten wird, wobei das Transformieren der ersten Bildaufnahme und/oder der zweiten Bildaufnahme ein oder mehrere der folgenden Schritte umfasst:

  ◦ Reduzieren von Verzerrungen und/oder Verzeichnungen des in der ersten und/oder zweiten Bildaufnahme abgebildeten optisch lesbaren Codes,

  ◦ Reduzieren von Reflexionen in der ersten und/oder zweiten Bildaufnahme,

  ◦ Erhöhen des Kontrasts des in der ersten und/oder zweiten Bildaufnahme abgebildeten optisch lesbaren Codes gegenüber der Umgebung des optisch lesbaren Codes,

- den in der transformierten Bildaufnahme abgebildeten optisch lesbaren Code zu dekodieren,

wobei die Transformationsparameter empirisch ermittelt wurden, wobei bei der empirischen Ermittlung diejenigen Transformationsparameter ausgewählt wurden, bei denen das Auslesen eines optisch lesbaren Codes in einer transformierten Bildaufnahme zu weniger Dekodierfehlern führt, als das Auslesen des optisch lesbaren Codes in der nicht-transformierten Bildaufnahme.

Ein weiterer Gegenstand der vorliegenden Erfindung ist ein Computerprogrammprodukt umfassend einen Datenträger, auf dem ein Computerprogramm gespeichert ist, wobei das Computerprogramm in einen Arbeitsspeicher eines Computersystems geladen werden kann und dort das Computersystem dazu veranlasst, folgende Schritte ausführen:

- Empfangen einer ersten Bildaufnahme von einem Gegenstand, wobei der Gegenstand einen optisch lesbaren Code umfasst, wobei der optisch lesbare Code in eine Oberfläche des Gegenstands eingebracht ist,

- Identifizieren des Gegenstands auf Basis der ersten Bildaufnahme,

- Auslesen von Transformationsparametern für den identifizierten Gegenstand aus einer Datenbank,

- Transformieren der ersten Bildaufnahme und/oder einer zweiten Bildaufnahme des Gegenstands auf Basis der Transformationsparameter, wobei eine transformierte Bildaufnahme erhalten wird, wobei das Transformieren der ersten Bildaufnahme und/oder der zweiten Bildaufnahme ein oder mehrere der folgenden Schritte umfasst:

  ◦ Reduzieren von Verzerrungen und/oder Verzeichnungen des in der ersten und/oder zweiten Bildaufnahme abgebildeten optisch lesbaren Codes,

  ◦ Reduzieren von Reflexionen in der ersten und/oder zweiten Bildaufnahme,

  ◦ Erhöhen des Kontrasts des in der ersten und/oder zweiten Bildaufnahme abgebildeten optisch lesbaren Codes gegenüber der Umgebung des optisch lesbaren Codes,

- Dekodieren des in der transformierten Bildaufnahme abgebildeten optisch lesbaren Codes,

wobei die Transformationsparameter empirisch ermittelt wurden, wobei bei der empirischen Ermittlung diejenigen Transformationsparameter ausgewählt wurden, bei denen das Auslesen eines optisch lesbaren Codes in einer transformierten Bildaufnahme zu weniger Dekodierfehlern führt, als das Auslesen des optisch lesbaren Codes in der nicht-transformierten Bildaufnahme.

Die Erfindung wird nachstehend näher erläutert, ohne zwischen den Erfindungsgegenständen (System, Verfahren, Computerprogrammprodukt) zu unterscheiden. Die nachfolgenden Erläuterungen sollen vielmehr für alle Erfindungsgegenstände in analoger Weise gelten, unabhängig davon, in welchem Kontext (System, Verfahren, Computerprogrammprodukt) sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die vorliegende Erfindung stellt Mittel zum Auslesen eines optisch lesbaren Codes bereits. Die Begriffe "Auslesen" und "Dekodieren" werden in dieser Beschreibung synonym verwendet.

Unter dem Begriff "optisch lesbarer Code" werden Markierungen verstanden, die mit Hilfe einer Kamera erfasst und beispielsweise in alphanumerische Zeichen umgewandelt werden können.

Beispiele für optisch lesbare Codes sind Strichcodes (Barcodes), gestapelte Codes, Composite Codes, Matrix Codes und 3D Codes. Auch alphanumerische Zeichen, die mittels automatisierter Texterkennung (engl. *optical character recognition,* Abkürzung: OCR) erfasst (interpretiert, gelesen) und digitalisiert werden können, fallen unter den Begriff optisch lesbare Codes.

Optisch lesbare Codes gehören zu den maschinenlesbaren Codes, d.h. zu Codes, die mittels einer Maschine erfasst und verarbeitet werden können. Im Fall der optisch lesbaren Codes umfasst eine solche "Maschine" üblicherweise eine Kamera.

Eine Kamera umfasst üblicherweise einen Bildsensor und optische Elemente. Der Bildsensor ist eine Vorrichtung zur Aufnahme von zweidimensionalen Abbildern aus Licht auf elektrischem Weg. Üblicherweise handelt es sich um einen halbleiterbasierten Bildsensor wie beispielsweise ein CCD-(CCD = charge-coupled device) oder CMOS-Sensor (CMOS = complementary metal-oxidesemiconductor). Die optischen Elemente (Linsen, Blenden und dergleichen) dienen einer möglichst scharfen Abbildung des Gegenstands (Objekts), von dem eine digitale Bildaufnahme erzeugt werden soll, auf dem Bildsensor.

Optisch lesbare Codes haben den Vorteil, dass sie von vielen Verbrauchern mit einfachen Mitteln ausgelesen werden können. So verfügen viele Verbraucher beispielsweise über ein Smartphone, das mit einer oder mehreren Kameras ausgestattet ist. Mittels einer solchen Kamera kann eine Abbildung des optisch lesbaren Codes auf dem Bildsensor erzeugt werden. Die Abbildung kann digitalisiert und von einem Computerprogramm, das auf dem Smartphone gespeichert ist, bearbeitet und/oder gespeichert werden. Ein solches Computerprogramm kann konfiguriert sein, den optisch lesbaren Code zu identifizieren und zu interpretieren, d.h. in eine andere Form zu übersetzen wie beispielsweise in eine Zahlenfolge, eine Folge von Buchstaben und/oder dergleichen, je nachdem, welche Information in Form des optisch lesbaren Codes vorliegt.

Der optisch lesbare Code ist in eine Oberfläche eines Gegenstands eingebracht. Ein solcher Gegenstand ist ein realer, körperlicher, fassbarer Gegenstand. Bei einem solchen Gegenstand kann es sich um einen natürlichen Gegenstand oder um einen industriell hergestellten Gegenstand handelt. Beispiele für Gegenstände im Sinne der vorliegenden Erfindung sind: Werkzeuge, Maschinenbauteile, Platinen, Chips, Behälter, Verpackungen, Schmuck, Designobjekte, Kunstobjekte, Arzneimittel (z.B. in Form von Tabletten), Arzneimittelverpackungen sowie pflanzliche und tierische Erzeugnisse.

In einer bevorzugten Ausführungsform der vorliegenden Erfindung handelt es sich bei dem Gegenstand um ein Arzneimittel (z.B. in Form einer Tablette oder einer Kapsel) oder um eine Arzneimittelverpackung.

In einer weiteren bevorzugten Ausführungsform der vorliegenden Erfindung handelt es sich bei dem Gegenstand um ein industriell hergestelltes Erzeugnis wie beispielsweise ein Bauteil für eine Maschine.

In einer weiteren bevorzugten Ausführungsform der vorliegenden Erfindung handelt es sich bei dem Gegenstand um ein pflanzliches oder tierisches Erzeugnis.

Ein pflanzliches Erzeugnis ist eine einzelne Pflanze oder ein Teil einer Pflanze (z.B. eine Frucht) oder eine Gruppe von Pflanzen oder eine Gruppe von Teilen einer Pflanze. Ein tierisches Erzeugnis ist ein Tier oder ein Teil eines Tieres oder eine Gruppe von Tieren oder eine Gruppe von Teilen eines Tieres oder ein Gegenstand, der von einem Tier hervorgebracht worden ist (wie z.B. ein Hühnerei). Auch industriell verarbeitete Erzeugnisse, wie beispielsweise Käse und Wurstwaren sollen unter den Begriff pflanzliches oder tierisches Erzeugnis fallen.

Üblicherweise handelt es sich bei dem pflanzlichen oder tierischen Erzeugnis um einen Teil einer Pflanze oder eines Tieres, der zum Verzehr durch einen Menschen oder ein Tier geeignet und/oder gedacht ist.

Vorzugsweise handelt es sich bei dem pflanzlichen Erzeugnis zumindest um einen Teil einer Kulturpflanze. Unter dem Begriff "Kulturpflanze" wird eine Pflanze verstanden, die durch das Eingreifen der Menschen zielgerichtet als Nutzpflanze angebaut wird. In einer bevorzugten Ausführungsform handelt es sich bei der Kulturpflanze um eine Obstpflanze oder eine Gemüsepflanze. Auch wenn Pilze biologisch nicht zu den Pflanzen zählen, sollen auch Pilze, insbesondere die Fruchtkörper von Pilzen, unter den Begriff pflanzliches Erzeugnis fallen.

Vorzugsweise handelt es sich bei der Kulturpflanze um eine der in der folgenden Enzyklopädie aufgeführten Pflanzen: Christopher Cumo: Encyclopedia of Cultivated Plants: From Acacia to Zinnia, Band 1 bis 3, ABC-CLIO, 2013, ISBN 9781598847758.

Ein pflanzliches oder tierisches Erzeugnis kann beispielsweise ein Apfel, eine Birne, eine Zitrone, eine Orange, eine Mandarine, eine Limone, eine Grapefruit, eine Kiwi, eine Banane, ein Pfirsich, eine Pflaume, eine Mirabelle, eine Aprikose, eine Tomate, ein Kohl (ein Blumenkohl, ein Weißkohl, ein Rotkohl, ein Grünkohl, Rosenkohl oder dergleichen), eine Melone, ein Kürbis, eine Gurke, eine Paprika, eine Zucchini, eine Aubergine, eine Kartoffel, eine Süßkartoffel, eine Lauchstange, Sellerie, ein Kohlrabi, ein Rettich, eine Mohrrübe, eine Pastinake, eine Schwarzwurzel, ein Spargel, eine Zuckerrübe, eine Ingwerwurzel, Rhabarber, eine Kokosnuss, eine Paranuss, eine Walnuss, eine Haselnuss, eine Esskastanie, ein Ei, ein Fisch, ein Stück Fleisch, ein Stück Käse, eine Wurst und/oder dergleichen sein.

Der optisch lesbare Code ist in eine Oberfläche des Gegenstands eingebracht. Das bedeutet, dass der optisch lesbare Code nicht in Form eines Anhängers an den Gegenstand angebracht ist und auch nicht in Form eines Aufklebers auf den Gegenstand aufgebracht ist. Stattdessen wurde eine Oberfläche des Gegenstands so verändert, dass die Oberfläche selbst den optisch lesbaren Code trägt.

Bei pflanzlichen Erzeugnissen und Eiern kann es sich bei der Oberfläche beispielsweise um die Schale handeln.

Der optisch lesbare Code kann in den Gegenstand eingraviert, eingeätzt, eingebrannt, eingeprägt und/oder auf sonstige Weise in eine Oberfläche des Gegenstands eingebracht sein. Vorzugsweise ist der optisch lesbare Code mittels eines Lasers in die Oberfläche des Gegenstands (zum Beispiel in die Schale bei einem Obst oder einem Gemüse) eingebracht. Dabei kann der Laser Farbstoffmoleküle in der Oberfläche des Gegenstands verändern (z.B. ausbleichen oder zerstören) und/oder lokal zu Verbrennungen und/oder Zerstörungen und/oder chemischen und/oder physikalischen Veränderungen des Gewebes führen (z.B. Verdampfen von Wasser, Denaturieren von Eiweiß und/oder ähnliches), so dass ein Kontrast zum umliegenden (nicht durch den Laser veränderten) Teil der Oberfläche entsteht.

Der optisch lesbare Code kann auch mittels eines Wasserstrahls oder Sandstrahls in eine Oberfläche des Gegenstands eingebracht sein.

Der optische lesbare Code kann auch mechanisch durch Ritzen, Stechen, Scheiden, Raspeln, Schaben, Stempeln und/oder dergleichen in eine Oberfläche des Gegenstands eingebracht sein.

Details zur Kennzeichnung von Gegenständen, insbesondere von pflanzlichen oder tierischen Erzeugnissen sind dem Stand der Technik zu entnehmen (siehe zum Beispiel EP2281468A1, WO2015/117438A1, WO2015/117541A1, WO2016/118962A1, WO2016/118973A1, DE102005019008A, WO2007/130968A2, US5660747, EP1737306A2, US10481589, US20080124433).

Vorzugsweise ist der optisch lesbare Code mit einem Kohlenstoffdioxidlaser ($CO_2$-Laser) in die Oberfläche des Gegenstands eingebracht worden.

Das Einbringen eines optisch lesbaren Codes in eine Oberfläche eines Gegenstands führt üblicherweise zu einer Markierung, die einen geringeren Kontrast aufweist als beispielsweise ein optisch lesbarer Code in Form eines schwarzen oder farbigen Aufdrucks auf einem weißen Aufkleber. Durch die Möglichkeit der individuellen Gestaltung des Aufklebers kann der Kontrast optimiert werden; beispielsweise weist eine schwarze Markierung (z.B. ein schwarzer Strichcode oder ein schwarzer Matrixcode) auf einem weißen Untergrund einen sehr hohen Kontrast auf. Solche hohen Kontraste werden durch das Einbringen von optisch lesbaren Codes in eine Oberfläche eines Gegenstands, insbesondere bei pflanzlichen oder tierischen Erzeugnissen und bei Arzneimitteln üblicherweise nicht erreicht. Dies kann zu Schwierigkeiten beim Auslesen der Codes führen. Zudem haben optisch lesbare Codes, die beispielsweise mittels eines Lasers in eine Oberfläche eines Gegenstands eingebacht werden, für verschiedene Gegenstände ein unterschiedliches Erscheinungsbild. Mit anderen Worten: optisch lesbare Codes, die beispielsweise in einen Apfel eingebracht werden, sehen üblicherweise anders aus als optisch lesbare Codes, die in eine Banane, eine Tomate, einen Kürbis oder in eine Kartoffel eingebracht werden. Auch die jeweilige Sorte einer Frucht kann einen Einfluss auf das Erscheinungsbild des optisch lesbaren Codes haben: optisch lesbare Codes in einem Apfel der Sorte "Granny Smith" sehen anders aus als optisch lesbare Codes in einem Apfel der Sorte "Pink Lady". Auch die Struktur der Oberfläche eines pflanzlichen oder tierischen Erzeugnisses kann einen Einfluss auf das Erscheinungsbild eines optisch lesbaren Codes haben: die vergleichsweise raue Oberflächenstruktur einer Kiwi kann das Auslesen eines optisch lesbaren Codes genauso erschweren wie Unebenheiten und Flecken in der Schale von Kartoffeln und Äpfeln. Üblicherweise weisen die Oberflächen von Früchten und Gemüsen Krümmungen auf. Wird ein optischer Code in eine gekrümmte Oberfläche eingebracht, kann es zu einer Verzerrung des Codes kommen; der Code kann beispielsweise eine kissenförmige oder tonnenförmige Verzeichnung aufweisen. Solche Verzerrungen/Verzeichnungen können das Dekodieren von Codes erschweren. Das Ausmaß einer Verzeichnung hängt dabei üblicherweise vom Grad der Krümmung ab. Wird ein optisch lesbarer Code mit einer Größe von 2 cm x 2 cm in einen Apfel eingebracht, ist die Verzeichnung/Verzerrung größer, als wenn derselbe Code in eine Melone eingebracht wird. Auf annähernd kugelförmigen Erzeugnissen (z.B. Apfel, Tomate, Melone) ergeben sich zudem andere Verzerrungen/Verzeichnungen als auf annährend zylinderförmigen Erzeugnissen (z.B. Gurken). Glatte Oberflächen (wie beispielsweise im Fall von Äpfeln) erzeugen mehr Reflexionen (z.B. durch Umgebungslicht) als raue Oberflächen (wie beispielsweise im Fall einer Kiwi).

Erfindungsgemäß werden daher Bildaufnahmen von optisch lesbaren Codes, die in eine Oberfläche eines Gegenstands eingebracht sind, vor dem Auslesen der Codes einer Transformation oder mehreren Transformationen unterzogen. Eine solche Transformation wird den Kontrast zwischen dem optisch lesbaren Code und dem umliegenden Teil der Oberfläche (den Teil der Oberfläche, die keinen Code trägt) erhöhen und/oder Verzerrungen/Verzeichnungen reduzieren oder eliminieren und/oder Reflexionen reduzieren oder eliminieren und/oder andere Artefakte, die auf den vorliegenden spezifischen Gegenstand zurückzuführen sind, reduzieren oder eliminieren. Dabei werden die eine oder die mehreren Transformationen spezifisch für den jeweils vorliegenden Gegenstand ausgewählt.

Eine "Transformation" ist eine Funktion oder ein Operator, die/der ein Bild als Eingabe entgegennimmt und ein Bild als Ausgabe erzeugt. Die Transformation sorgt dafür, dass ein optisch lesbarer Code, der auf dem Eingabebild abgebildet ist, in dem Ausgabebild gegenüber seiner Umgebung einen höheren Kontrast aufweist als im Eingangsbild und/oder im Ausgabebild eine geringere Verzerrung/Verzeichnung aufweist als im Eingangsbild. Die Transformation sorgt dafür, dass Reflexionen von Licht auf der Oberfläche des Gegenstands im Ausgabebild gegenüber dem Eingabebild reduziert sind. Die Transformation sorgt dafür, dass Unebenheiten und/oder Uneinheitlichkeiten auf der Oberfläche des Gegenstands im Ausgabebild weniger deutlich in Erscheinung treten als im Eingabebild. Allgemein sorgt die Transformation dafür, dass das Ausgabebild weniger Dekodierfehler beim Dekodieren des abgebildeten optisch lesbaren Codes erzeugt als das Eingabebild. Ein solcher Dekodierfehler entsteht beispielsweise, wenn ein weißes Quadrat eines QR-Codes von dem Bildsensor als ein schwarzes Quadrat interpretiert wird.

Ein oder mehrere Transformationsparameter bestimmen, welche Transformation(en) durchgeführt werden, und bei mehreren Transformationen, in welcher Reihenfolge sie durchgeführt werden. Zunächst wird eine erste Bildaufnahme des Gegenstands erzeugt.

Unter dem Begriff "Bildaufnahme" wird vorzugsweise eine zweidimensionale Abbildung des Gegenstands oder eines Teils davon verstanden. Üblicherweise handelt es sich bei der Bildaufnahme um eine digitale Bildaufnahme. Der Begriff "digital" bedeutet, dass die Bildaufnahme von einer Maschine, in der Regel einem Computersystem, verarbeitet werden kann. Unter "Verarbeitung" werden die bekannten Verfahren zur elektronischen Datenverarbeitung (EDV) verstanden.

Digitale Bildaufnahmen können mit Computersystemen und Software verarbeitet, bearbeitet und reproduziert sowie in standardisierte Datenformate konvertiert werden, wie zum Beispiel JPEG, Portable Network Graphics (PNG) oder Scalable Vector Graphics (SVG). Digitale Bildaufnahmen können mit geeigneten Anzeigegeräten visualisiert werden, wie zum Beispiel mit Computermonitoren, Projektoren und/oder Druckern.

In einer digitalen Bildaufnahme werden Bildinhalte üblicherweise durch ganze Zahlen repräsentiert und gespeichert. In den meisten Fällen handelt es sich um zweidimensionale Bilder, die binär kodiert und gegebenenfalls komprimiert sein können. Bei den digitalen Bildaufnahmen handelt es sich üblicherweise um Rastergrafiken, bei denen die Bildinformation in einer gleichmäßigen Rasterung abgelegt ist. Rastergrafiken bestehen aus einer rasterförmigen Anordnung von so genannten Bildpunkten (Pixel) im Fall von zweidimensionalen Darstellungen oder Volumenelementen (Voxel) im Fall dreidimensionaler Darstellungen, denen jeweils eine Farbe bzw. ein Grauwert zugeordnet ist. Die Hauptmerkmale einer 2D-Rastergrafik sind daher die Bildgröße (Breite und Höhe gemessen in Pixeln, umgangssprachlich auch Bildauflösung genannt) sowie die Farbtiefe. Einem Bildpunkt einer digitalen Bilddatei ist üblicherweise eine Farbe zugeordnet. Die für einen Bildpunkt verwendete Kodierung der Farbe definiert sich unter anderem über den Farbraum und die Farbtiefe. Der einfachste Fall ist ein Binärbild, bei dem ein Bildpunkt einen Schwarzweiß-Wert speichert. Bei einem Bild, dessen Farbe über den so genannten RGB-Farbraum definiert ist (RGB steht für die Grundfarben Rot, Grün und Blau), besteht jeder Bildpunkt aus drei Farbwerten, einem Farbwert für die Farbe Rot, einem Farbwert für die Farbe Grün und einem Farbwert für die Farbe Blau. Die Farbe eines Bildpunktes ergibt durch die Überlagerung (additives Mischen) der drei Farbwerte. Der einzelne Farbwert ist z.B. in 256 unterscheidbare Stufen diskretisiert, die Tonwerte genannt werden und üblicherweise von 0 bis 255 reichen. Die Farbnuance "0" eines jeden Farbkanals ist die dunkelste. Haben alle drei Kanäle den Tonwert 0, erscheint der entsprechende Bildpunkt schwarz; haben alle drei Kanäle den Tonwert 255, erscheint der entsprechende Bildpunkt weiß. Bei der Ausführung der vorliegenden Erfindung werden digitale Bildaufnahmen bestimmten Operationen (Transformationen) unterworfen. Die Operationen betreffen dabei überwiegend die Bildpunkte als sogenannte räumliche Operatoren wie beispielsweise ein Kantendetektor, bzw. die Tonwerte der einzelnen Bildpunkte wie beispielsweise bei Farbraumtransformationen. Es gibt eine Vielzahl an möglichen digitalen Bildformaten und Farbkodierungen. Vereinfachend wird in dieser Beschreibung davon ausgegangen, dass die vorliegenden Bilder RGB-Rastergrafiken mit einer spezifischen Zahl an Bildpunkten sind. Diese Annahme soll jedoch in keiner Weise limitierend verstanden werden. Dem Fachmann der Bildverarbeitung ist klar, wie er die Lehre dieser Beschreibung auf Bilddateien, die in anderen Bildformaten vorliegen und/oder bei denen die Farbwerte anders kodiert sind, übertragen kann.

Bei der mindestens einen Bildaufnahme kann es sich auch um einen oder mehrere Ausschnitte aus einer Videosequenz handeln.

Die mindestens eine Bildaufnahme wird mit Hilfe einer Kamera oder mehrerer Kameras erzeugt. Vorzugsweise wird die mindestens eine Bildaufnahme von einer oder mehreren Kameras eines Smartphones erzeugt.

Die Verwendung von mehreren Kameras, die einen Gegenstand aus unterschiedlichen Richtungen betrachten und Bildaufnahmen aus unterschiedlichen Blickrichtungen erzeugen, hat den Vorteil, dass Tiefeninformationen erfasst werden. Aus solchen Tiefeninformationen lassen sich beispielsweise Informationen über vorhandene Krümmungen des abgebildeten Gegenstands ableiten und/oder herauslesen.

Die erste Bildaufnahme zeigt den in die Oberfläche des Gegenstands eingebrachten optisch lesbaren Code.

Die erste Bildaufnahme dient der Ermittlung von Transformationsparametern. Es werden anhand der ersten Bildaufnahme diejenigen Transformationsparameter ermittelt, die bei einer Transformation der ersten Bildaufnahme (und/oder einer zweiten Bildaufnahme) gemäß den Transformationsparametern zu einer transformierten Bildaufnahme führen, die weniger Dekodierfehler beim Dekodieren des abgebildeten optischen Codes erzeugt als die erste Bildaufnahme, dadurch, dass der Kontrasts des optisch lesbaren Codes gegenüber der Umgebung des optisch lesbaren Codes bei der transformierten Bildaufnahme höher ist als bei der ersten Bildaufnahme und/oder weniger Verzerrungen/Verzeichnungen/Reflexionen auftreten.

Die Ermittlung der Transformationsparameter erfolgt in zwei Schritten: in einem ersten Schritt wird derjenige Gegenstand identifiziert, der (zumindest anteilig) in der ersten Bildaufnahme abgebildet ist; in einem zweiten Schritt werden diejenigen Transformationsparameter, die für den identifizierten Gegenstand zu einer Kontrasterhöhung des optisch lesbaren Codes gegenüber seiner Umgebung führen, aus einem Datenspeicher ausgelesen.

Die Identifizierung kann beispielsweise anhand von charakteristischen Eigenschaften des Gegenstands, die in der ersten Bildaufnahme abgebildet sind, erfolgen. Solche charakteristischen Eigenschaften sind beispielsweise die Farbe bzw. die Farbverteilung, die Form, die Größe, die Textur und/oder andere/weitere. Mustererkennungsverfahren, wie sie dem Fachmann der Bildverarbeitung bekannt sind, können verwendet werden, um den Gegenstand anhand von abgebildeten charakteristischen Merkmalen zu identifizieren.

Vorzugsweise wird für die Identifizierung des Gegenstands ein trainiertes Modell des maschinellen Lernens verwendet. Ein solches Modell wird in dieser Beschreibung auch als Erkennungsmodell bezeichnet.

Ein solches Modell kann in einem überwachten Lernverfahren trainiert werden, zumindest anteilig auf Basis der ersten Bildaufnahme, eine Information auszugeben, um welchen Gegenstand es sich in der ersten Bildaufnahme handelt.

Ein "Modell des maschinellen Lernens" kann als eine computerimplementierte Datenverarbeitungsarchitektur verstanden werden. Das Modell kann Eingabedaten empfangen und Ausgabedaten auf der Grundlage dieser Eingabedaten und Modell-Parametern liefern. Das Modell kann durch Training eine Beziehung zwischen den Eingabedaten und den Ausgabedaten erlernen. Beim Training können die Modell-Parameter angepasst werden, um eine gewünschte Ausgabe für eine bestimmte Eingabe zu liefern.

Beim Trainieren eines solchen Modells werden dem Modell Trainingsdaten präsentiert, aus denen es lernen kann. Das trainierte Modell des maschinellen Lernens ist das Ergebnis des Trainingsprozesses. Die Trainingsdaten umfassen neben Eingabedaten die korrekten Ausgabedaten (Zieldaten), die das Modell auf Basis der Eingabedaten erzeugen soll. Beim Trainieren werden Muster erkannt, die die Eingabedaten auf die Zieldaten abbilden.

Im Trainingsprozess werden die Eingabedaten der Trainingsdaten in das Modell eingegeben, und das Modell erzeugt Ausgabedaten. Die Ausgabedaten werden mit den Zieldaten (sogenannte *Ground Truth* Daten) verglichen. Modell-Parameter werden so verändert, dass die Abweichungen zwischen den Ausgabedaten und den Zieldaten auf ein (definiertes) Minimum reduziert werden.

Im Training kann eine Fehlerfunktion (engl.: *loss function*) verwendet werden, um die Vorhersagequalität des Modells zu bewerten. Die Fehlerfunktion kann so gewählt werden, dass sie eine erwünschte Beziehung zwischen Ausgabedaten und Zieldaten belohnt und/oder eine unerwünschte Beziehung zwischen Ausgabedaten und Zieldaten bestraft. Eine solche Beziehung kann z.B. eine Ähnlichkeit, eine Unähnlichkeit oder eine andere Beziehung sein.

Eine Fehlerfunktion kann verwendet werden, um einen Fehler (engl.: *loss*) für ein gegebenes Paar aus Ausgabedaten und Zieldaten zu berechnen. Das Ziel des Trainingsprozesses kann darin bestehen, die Parameter des maschinellen Lernmodells so zu verändern (anzupassen), dass der Fehlerwert für alle Paare des Trainingsdatensatzes auf ein (definiertes) Minimum reduziert wird.

Eine Fehlerfunktion kann z.B. die Abweichung zwischen den Ausgabedaten des Modells für bestimmte Eingabedaten und den Zieldaten quantifizieren. Handelt es sich bei den Ausgabedaten und den Zieldaten beispielsweise um Zahlen, kann die Fehlerfunktion die absolute Differenz zwischen diesen Zahlen sein.

In diesem Fall kann ein hoher absoluter Wert der Fehlerfunktion bedeuten, dass ein oder mehrere Modell-Parameter in hohem Maße geändert werden müssen.

Bei Ausgabedaten in Form von Vektoren können beispielsweise Differenzmetriken zwischen Vektoren wie der mittlere quadratische Fehler, ein Kosinusabstand, eine Norm des Differenzvektors wie ein euklidischer Abstand, ein Tschebyscheff-Abstand, eine Lp-Norm eines Differenzvektors, eine gewichtete Norm oder jede andere Art von Differenzmetrik zweier Vektoren als Fehlerfunktion gewählt werden.

Das Modell des maschinellen Lernens kann als ein Klassifikationsmodell ausgestaltet (konfiguriert) sein, das eine Bildaufnahme als Eingabedaten einem spezifischen Gegenstand als Ausgabedaten zuordnet. Das Modell kann beispielsweise eine Zahl ausgeben, die den spezifischen Gegenstand, der in der Bildaufnahme abgebildet ist, repräsentiert.

Solche Klassifikationsmodelle sind im Stand der Technik beschrieben (siehe z.B. F. Sultana et al.: Advancements in Image Classification using Convolutional Neural Network, arXiv:1905.03288v1 [cs.CV], 2019; A. Khan et al.: A Survey of the Recent Architectures of Deep Convolutional Neural Networks, Artificial Intelligence Review, DOI: https://doi.org/10.1007/s10462-020-09825-6).

Die Zuordnung der ersten Bildaufnahme zu demjenigen Gegenstand, der in der ersten Bildaufnahme abgebildet ist, wird in dieser Beschreibung auch als "Identifizieren des Gegenstands" bezeichnet. Dabei kann die erste Bildaufnahme dem jeweiligen Gegenstand zugeordnet werden und/oder dem jeweiligen Teil eines Gegenstands, der/das in der Bildaufnahme abgebildet ist. Bei pflanzlichen Erzeugnissen kann die erste Bildaufnahme auch einem Reifegrad und/oder einem visuellen Erscheinungsbild zugeordnet werden; im Fall von Bananen beispielsweise einer grünen oder gelben Banane; im Fall von Paprika beispielsweise einer grünen, gelben oder roten Paprika, im Fall eines Apfels der jeweils vorliegenden Apfelsorte und/oder dergleichen.

Letztlich dient das Identifizieren des Gegenstands in der ersten Bildaufnahme der Ermittlung von Transformationsparametern, die auf die erste Bildaufnahme (oder eine zweite Bildaufnahme) angewendet werden sollen, um den Kontrast des optisch lesbaren Codes gegenüber seiner Umgebung zu erhöhen, Verzerrungen/Verzeichnungen zu reduzieren, Reflexionen zu reduzieren und/oder andere Eigenarten, die zu Dekodierfehlern führen können, zu reduzieren/eliminieren. Damit sollen bei der Identifizierung Charakteristika des abgebildeten Gegenstands identifiziert werden, die die Auswahl derjenigen Transformationsparameter erlauben, die für eine möglichst fehlerfreie Dekodierung des optisch lesbaren Codes führen.

Üblicherweise sind Transformationsparameter in einem Datenspeicher, beispielsweise in einer relationalen Datenbank abgespeichert. Das Modell des maschinellen Lernens kann konfiguriert und trainiert sein, auf Basis der ersten Bildaufnahme eine Kennung auszugeben, die in der Datenbank mit den Transformationsparametern verknüpft ist. Mit anderen Worten: anhand einer Kennung, die den in der ersten Bildaufnahme abgebildeten Gegenstand repräsentiert, können Transformationsparameter, die der Kennung zugeordnet sind, aus einer Datenbank ermittelt und ausgelesen werden.

Es ist auch denkbar, dass das Modell des maschinellen Lernens trainiert wird, die Transformationsparameter selbst zu liefern / auszugeben.

Wie bereits beschrieben, legen die Transformationsparameter fest, welche Transformation(en) auf die erste Bildaufnahme (oder auf eine zweite Bildaufnahme) angewendet werden sollen, und bei mehreren Transformationen, in welcher Reihenfolge die Transformationen angewendet werden sollen. Diejenigen Transformationen, die für einen spezifischen Gegenstand dafür sorgen, dass die transformierte Bildaufnahme weniger Dekodierfehler erzeugt als die nicht-transformierte Bildaufnahme, können empirisch ermittelt werden.

Es können also für eine Vielzahl an Gegenständen Bildaufnahmen erzeugt werden, in denen optisch lesbare Codes, die in eine Oberfläche der Gegenstände eingebracht sind, zumindest anteilig abgebildet sind. Ein Fachmann der Bildverarbeitung kann für die einzelnen Aufnahmen Transformationen festlegen, die zu einer Kontrasterhöhung des optisch lesbaren Codes gegenüber seiner Umgebung führen und/oder die zu einer Reduktion/Eliminierung von Verzerrungen/Verzeichnungen führen und/oder die Reflexionen reduzieren/eliminieren und/oder die andere Eigenarten, die zu Dekodierfehlern führen können, reduzieren/eliminieren.

Der Dekodierfehler kann empirisch ermittelt werden. Ein Dekodierfehler kann zum Beispiel der prozentuale Anteil von Codes, die nicht dekodiert werden konnten, sein. Viele optisch lesbare Codes weisen Mittel zur Fehlerkorrektur auf. Der Dekodierfehler kann auch die Anzahl an korrigierten Bits in einem Code bedeuten.

Die Transformationen können jeweils getestet werden; falls sie nicht zu dem gewünschten Erfolg führen, können sie verworfen, verfeinert, geändert und/oder durch weitere Transformationen erweitert werden.

Beispiele für Transformationen sind: räumliche Tiefpassfilterung, räumliche Hochpassfilterung, Schärfen, Weichzeichnen (z.B. Gauß'sches Weichzeichnen), Unscharfmaskierung, Erosion, Medianfilter, Maximumfilter, Reduktion des Kontrastumfangs, Kantendetektion, Farbtiefe erniedrigen, Graustufenkonvertierung, Negativ erstellen, Farbkorrekturen (Farbbalance, Gammakorrektur, Sättigung), Farben-Ersetzung, Fourier-Transformation, Fourier-Tiefpassfilter, Fourier-Hochpassfilter, inverse Fourier-Transformation.

Einige Transformationen können durch Faltung der Rastergrafik mit einer oder mit mehreren Faltungsmatrizen (engl.: *convolution kernel*) durchgeführt werden. Dabei handelt es sich üblicherweise um quadratische Matrizen ungerader Abmessungen, die unterschiedliche Größen aufweisen können (zum Beispiel 3x3, 5x5, 9x9 und/oder dergleichen). Einige Transformationen können als lineares System dargestellt werden, wobei eine diskrete Faltung, eine lineare Operation, angewandt wird. Für diskrete zweidimensionale Funktionen (digitale Bilder) ergibt sich folgende Berechnungsformel für die diskrete Faltung:

$$I^*(x, y) = \sum_{i=1}^{n} \sum_{j=1}^{n} I(x - i + a, y - 1 + a)(k(i, j)$$

wobei $I^*(x, y)$ die Ergebnispixel der transformierten Bildaufnahme darstellen und $I$ die ursprüngliche Bildaufnahme, auf die die Transformation angewendet wird, ist. $a$ gibt die Koordinate des Mittelpunkts in der quadratischen Faltungsmatrix an und $k(i,j)$ ist ein Element der Faltungsmatrix. Bei 3x3-Faltungsmatrizen ist $n=3$ und $a=2$; bei 5x5-Matrizen ist $n=5$ und $a=3$.

Nachfolgend sind Transformationen und Sequenzen von Transformationen aufgeführt, die beispielsweise bei Äpfeln dazu führen, dass die transformierte Bildaufnahme weniger Dekodierfehler erzeugt als die nicht-transformierte Bildaufnahme:

- Farbtransformation in intensitätslineare RGB-Signale
- Farbtransformation der linearen RGB-Signale in z.B. einen Reflexkanal und/oder einen Beleuchtungskanal und mindestens zwei Farbkanäle zur Unterscheidung der codierten und uncodierten Oberflächenteile. Dazu werden die intensitätslinearen RGB-Farbsignale untereinander so linear kombiniert, dass eine bestmögliche Unterscheidung zwischen codierten und uncodierten Flächenteilen vorgenommen wird.
- Reflexkorrektur durch Subtraktion des Reflexkanals von den mindestens zwei Farbkanälen (additive Korrektur)
- Beleuchtungskorrektur durch Normierung der mindestens zwei Farbkanäle auf den Beleuchtungskanal (multiplikative Korrektur)
- Korrektur von Störungen in der Apfeloberfläche durch Detektion der Störungen und räumlicher Interpolation aus der Umgebung der Störstelle
- Unscharfmaskierung des beleuchtungs- und reflexkorrigierten Bildausschnitts mit einer Filtermaske in einer Ausdehnung, so dass räumliche Inhomogenitäten z.B. der Bildhelligkeit durch die gekrümmte Oberflächengestalt des Apfels gut ausgeglichen werden, und durch Anhebung der hochfrequenten Bildanteile der Bildkontrast zwischen codierten und uncodierten Flächenteilen verstärkt und optimiert wird.

Weitere Beispiele für Transformationen sind den zahlreichen Publikationen zum Thema digitale Bildverarbeitung zu entnehmen.

Es ist ferner denkbar, die erste Bildaufnahme zu analysieren, um Transformationsparameter aus der Bildaufnahme direkt abzuleiten (diese Ausführungsform entspricht nicht der beanspruchten Ausführungsform, die Transformationsparameter für das identifizierte Gegenstand aus einer Datenbank ausliest). Im Fall der Identifikation des in der Bildaufnahme abgebildeten Gegenstands werden Transformationsparameter auf Basis des identifizierten Gegenstands ermittelt; in dem Fall der direkten Ableitung von Transformationsparametern können diese aus der Art und Weise, wie der Gegenstand abgebildet ist, abgeleitet werden. Beispielsweise kann eine mittlere Helligkeit, ein Kontrastumfang, eine Farbverteilung und/oder dergleichen ermittelt werden, anhand derer ein oder mehrere Transformationsparameter ausgewählt oder festgesetzt oder ermittelt werden, die zu weniger Dekodierfehlern führen. Eine Kontrastoptimierung zwischen kodierten und unkodierten Flächenbereichen kann alternativ auch direkt durch eine Korrelationsanalyse z.B. durch eine Hauptachentransformation der aufgenommenen Objektfarben in dieser Bildregion erreicht werden.

In einem weiteren Schritt werden eine oder mehrere Transformationen auf die erste Bildaufnahme oder auf eine zweite Bildaufnahme gemäß den Transformationsparametern angewendet. Wie bereits deutlich gemacht, müssen die Transformationen nicht auf die erste Bildaufnahme angewendet werden, d.h. nicht auf diejenige Bildaufnahme, auf deren Basis die Transformationsparameter ermittelt worden sind. Stattdessen ist es auch denkbar, die Transformationen auf eine zweite Bildaufnahme anzuwenden, die vorzugsweise denselben Gegenstand zeigt wie die erste Bildaufnahme aber gegebenenfalls zu einem anderen Zeitpunkt (z.B. früher oder später). Es ist denkbar, dass die Kamera, mit der die erste Bildaufnahme erzeugt wird, konfiguriert ist, kontinuierlich mit einer definierten Rate Abbildungen, die auf dem Bildsensor der Kamera fallen, zu digitalisieren, digitale Bildaufnahmen zu erzeugen, und diese digitalen Bildaufnahmen einem Erkennungsmodell zur Erkennung des abgebildeten Gegenstands zuzuführen. Das Erkennungsmodell kann eine Kennung für den erkannten (identifizierten) Gegenstand an eine Steuereinheit übermitteln, die anhand der Kennung Transformationsparameter ermittelt. Die ermittelten Transformationsparameter können dann auf eines oder mehrere der nachfolgend erzeugten digitalen Bildaufnahmen angewandt werden. Eine solche nachfolgend erzeugte Bildaufnahme wird in dieser Beschreibung als eine "zweite Bildaufnahme" bezeichnet.

Es ist ebenso denkbar, dass die Identifizierung des abgebildeten Gegenstands nicht auf Basis einer einzelnen ersten Bildaufnahme erfolgt, sondern auf Basis mehrerer erster Bildaufnahmen, z.B. auf Basis einer Serie zeitlich aufeinander folgender Bildaufnahmen. Es ist ebenso denkbar, dass Transformationsparameter nicht auf Basis einer einzelnen ersten Bildaufnahme ermittelt werden, sondern auf Basis mehrerer erster Bildaufnahmen, z.B. auf Basis einer Serie zeitlich aufeinander folgender Bildaufnahmen. Ebenso ist es denkbar, dass die Transformationen nicht auf eine einzelne (erste oder zweite) Bildaufnahme angewendet werden, sondern auf mehrere Bildaufnahmen, beispielsweise auf Bildaufnahmen einer Serie von zeitlich aufeinander folgenden Bildaufnahmen.

Das Ergebnis der Anwendung einer oder mehrerer Transformationen auf eine Bildaufnahme des optisch lesbaren Codes in einer Oberfläche eines Gegenstands ist eine transformierte Bildaufnahme.

In der transformierten Bildaufnahme ist der optisch lesbare Code besser erkennbar und auslesbar als in der ursprünglichen (nicht-transformierten) Bildaufnahme.

In einem nächsten Schritt wird der Code in der transformierten Bildaufnahme ausgelesen (dekodiert). Je nach verwendetem Code gibt es hier bereits existierende Verfahren zum Auslesen (Dekodieren) des jeweiligen Codes.

Der ausgelesene (dekodierte) Code kann Informationen zu dem Gegenstand, in dessen Oberfläche der Code eingebracht ist, enthalten.

In einer bevorzugten Ausführungsform umfasst der ausgelesene Code eine (individuelle) Kennung, anhand der ein Verbraucher weitere Informationen zu dem Gegenstand zum Beispiel aus einer Datenbank erhalten kann. Der ausgelesene Code und/oder mit dem ausgelesenen Code verknüpfte Informationen können ausgegeben, d.h. auf einem Bildschirm angezeigt, auf einem Drucker ausgedruckt und/oder in einem Datenspeicher gespeichert werden.

Weitere Informationen zu einer solchen (individuellen) Kennung und den Informationen, die zu dem mit der Kennung verknüpften Gegenstand gespeichert sein und einem Verbraucher angezeigt werden können, sind in der Patentanmeldung EP3896629A1 beschrieben.

Die Erfindung wird nachfolgend anhand von Zeichnungen näher erläutert, ohne die Erfindung auf die in den Zeichnungen gezeigten Merkmale und Merkmalskombinationen beschränken zu wollen.

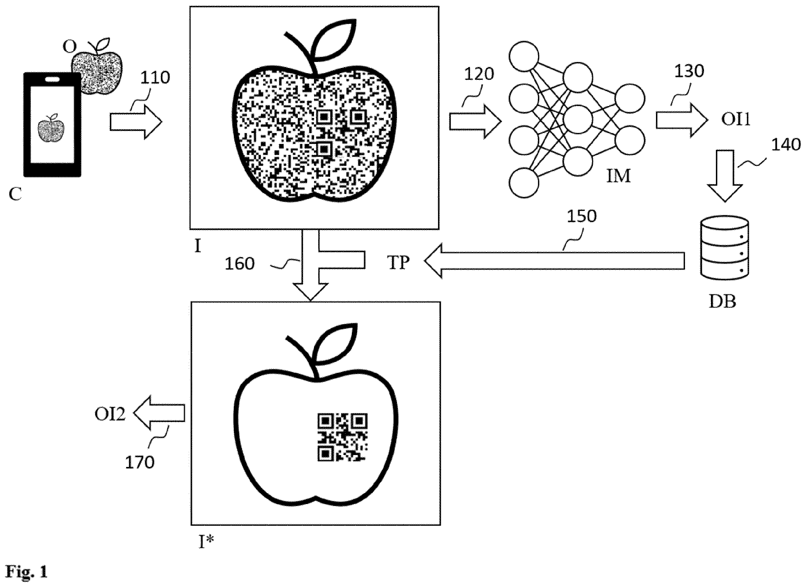

Fig. 1 zeigt schematisch und beispielhaft in Form eines Ablaufschemas das Auslesen eines optisch lesbaren Codes, der in eine Oberfläche eines Gegenstands eingebracht ist.

In einem ersten Schritt (110) wird mit Hilfe einer Kamera (C) eine digitale Bildaufnahme (I) des Gegenstands (O) erzeugt. In einem zweiten Schritt (120) wird die digitale Bildaufnahme (I) einem Erkennungsmodell (IM) zugeführt. Das Erkennungsmodell (IM) ist konfiguriert, auf Basis der Bildaufnahme (I) den in der Bildaufnahme (I) abgebildeten Gegenstand (O) zu identifizieren. In einem dritten Schritt (130) liefert das Erkennungsmodell (IM) eine Information (OI1) über den identifizierten Gegenstand (O). In einem vierten Schritt (140) werden auf Basis der Information (OI1) über den identifizierten Gegenstand (O) Transformationsparameter (TP) aus einer Datenbank (DB) ermittelt. Die ermittelten Transformationsparameter (TP) werden in einem fünften Schritt (150) einem Prozess zur Transformation der Bildaufnahme (I) zugeführt. In einem sechsten Schritt (160) werden eine oder mehrere Transformationen auf die Bildaufnahme (I) gemäß den Transformationsparametern (TP) angewendet. Das Ergebnis ist eine transformierte Bildaufnahme (I*), in der ein optisch lesbarer Code (in diesem Fall ein QR-Code), der in eine Oberfläche des Gegenstands (O) eingebracht ist, einen höheren Kontrast gegenüber seiner Umgebung aufweist und damit deutlicher erkennbar und leichter auszulesen ist als der Code im Fall der nicht-transformierten Bildaufnahme (I). In einem siebten Schritt (170) wird der optisch lesbare Code ausgelesen und der ausgelesene Code (OI2) bereitgestellt. Der ausgelesene Code (OI2) kann angezeigt werden und/oder es können Informationen zu dem Gegenstand (O) anhand des ausgelesenen Codes (OI2) z.B. aus einer Datenbank ausgelesen und bereitgestellt (z.B. übermittelt und angezeigt) werden.

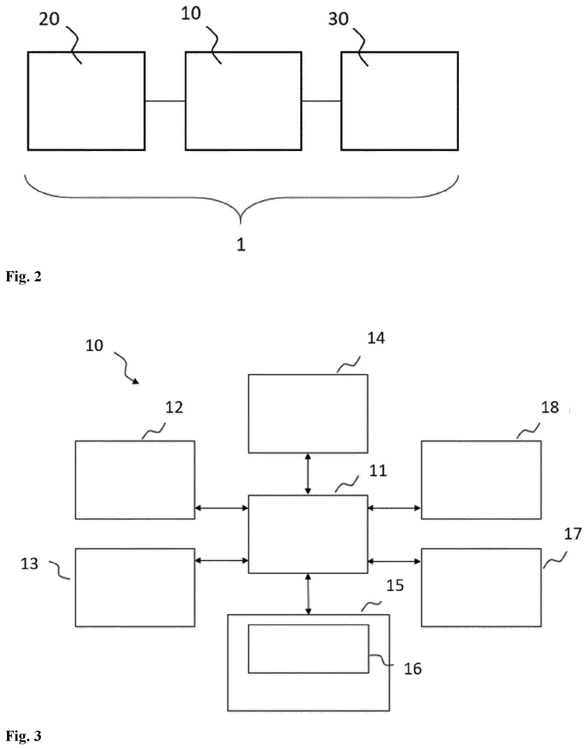

Fig. 2 zeigt beispielshaft und schematisch ein erfindungsgemäßes System.

Das System (1) umfasst ein Computersystem (10), eine Kamera (20) und einen oder mehrere Datenspeicher (30). Mit Hilfe der Kamera (20) können Bildaufnahmen von Gegenständen erzeugt werden. Die Kamera (20) ist mit dem Computersystem (10) verbunden, so dass die erzeugten Bildaufnahmen auf das Computersystem (10) übertragen werden können. Die Kamera (20) kann mit dem Computersystem (10) über eine Kabelverbindung und/oder über eine Funkverbindung verbunden sein. Auch eine Verbindung über ein oder mehrere Netzwerke ist denkbar. Denkbar ist ferner, dass die Kamera (20) ein integraler Bestandteil des Computersystems (10) ist, wie dies beispielsweise bei heutigen Smartphones und Tablet-Computern der Fall ist.

Das Computersystem (10) ist (beispielsweise mittels eines Computerprogramms) konfiguriert, eine Bildaufnahme (von der Kamera oder aus einem Datenspeicher) zu empfangen, den in der Bildaufnahme abgebildeten Gegenstand zu identifizieren, anhand des identifizierten Gegenstands Transformationsparameter zu ermitteln, die Bildaufnahme und/oder eine weitere Bildaufnahme des Gegenstands gemäß den Transformationsparametern zu transformieren, wobei eine transformierte Bildaufnahme erhalten wird, den optischen Code in der transformierten Bildaufnahme zu dekodieren und den dekodierten Code auszugeben und/oder Informationen bereitzustellen, die mit dem dekodierten Code verknüpft sind.

In dem Datenspeicher (30) können Bildaufnahmen, Transformationsparameter, Transformationsoperatoren und/oder -funktionen, Erkennungsmodelle, Computerprogramme und/oder andere/weitere Informationen gespeichert sein. Der Datenspeicher (30) kann mit dem Computersystem (10) über eine Kabelverbindung und/oder über eine Funkverbindung verbunden sein. Auch eine Verbindung über ein oder mehrere Netzwerke ist denkbar. Denkbar ist ferner, dass der Datenspeicher (30) ein integraler Bestandteil des Computersystems (10) ist. Denkbar ist ferner, dass mehrere Datenspeicher vorhanden sind.

Fig. 3 zeigt schematisch ein Computersystem (10). Ein solches Computersystem (10) kann ein oder mehrere ortsfeste oder tragbare elektronische Geräte umfassen. Das Computersystem (10) kann eine oder mehrere Komponenten umfassen, wie z.B. eine Verarbeitungseinheit (11), die mit einem Speicher (15) verbunden ist.

Die Verarbeitungseinheit (11) (engl.: *processing unit*) kann einen oder mehrere Prozessoren allein oder in Kombination mit einem oder mehreren Speichern umfassen. Bei der Verarbeitungseinheit (11) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (11) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (11) kann konfiguriert sein, Computerprogramme auszuführen, die in einem Arbeitsspeicher der Verarbeitungseinheit (11) oder im Speicher (15) desselben oder eines anderen Computersystems gespeichert sein können.

Der Speicher (15) kann eine gewöhnliche Computerhardware sein, die in der Lage ist, Informationen wie z.B. digitale Bildaufnahmen, Daten, Computerprogramme und/oder andere digitale Informationen entweder vorübergehend und/oder dauerhaft zu speichern. Der Speicher (15) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher, eine austauschbare Computerdiskette, eine optische Disc, ein Magnetband oder eine Kombination der oben genannten. Zu den optischen Discs können Compact Discs mit Nur-LeseSpeicher (CD-ROM), Compact Discs mit Lese-/Schreibfunktion (CD-R/W), DVDs, Blu-ray-Discs und ähnliche gehören.

Zusätzlich zum Speicher (15) kann die Verarbeitungseinheit (11) auch mit einer oder mehreren Schnittstellen (12, 13, 14, 17, 18) verbunden sein, um Informationen anzuzeigen, zu übertragen und/oder zu empfangen. Die Schnittstellen können eine oder mehrere Kommunikationsschnittstellen (17, 18) und/oder eine oder mehrere Benutzerschnittstellen (12, 13, 14) umfassen. Die eine oder mehrere Kommunikationsschnittstellen können so konfiguriert sein, dass sie Informationen senden und/oder empfangen, z.B. zu und/oder von einer Kamera, anderen Computern, Netzwerken, Datenspeichern oder dergleichen. Die eine oder mehrere Kommunikationsschnittstellen können so konfiguriert sein, dass sie Informationen über physische (verdrahtete) und/oder drahtlose Kommunikationsverbindungen übertragen und/oder empfangen. Die eine oder die mehreren Kommunikationsschnittstellen können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen (12, 13, 14) können eine Anzeige (14) umfassen. Eine Anzeige (14) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (12, 13) kann/können verdrahtet oder drahtlos sein und kann/können so konfiguriert sein, dass sie Informationen von einem Benutzer in das Computersystem (10) empfängt/empfangen, z.B. zur Verarbeitung, Speicherung und/oder Anzeige. Geeignete Beispiele für Benutzereingabeschnittstellen sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und dergleichen umfassen.

Ein oder mehrere Computerprogramme (16) können im Speicher (15) gespeichert sein und von der Verarbeitungseinheit (11) ausgeführt werden, die dadurch programmiert wird, die in dieser Beschreibung beschriebenen Funktionen zu erfüllen. Das Abrufen, Laden und Ausführen von Anweisungen des Computerprogramms (16) kann sequenziell erfolgen, so dass jeweils ein Befehl abgerufen, geladen und ausgeführt wird. Das Abrufen, Laden und/oder Ausführen kann aber auch parallel erfolgen.

Das erfindungsgemäße System kann als Laptop, Notebook, Netbook, Tablet-PC und/oder Handheld-Gerät (z.B. Smartphone) ausgeführt sein. Vorzugsweise umfasst das erfindungsgemäße System eine Kamera.

**Patentansprüche**

1.    Computer-implementiertes Verfahren umfassend die Schritte

- Empfangen einer ersten Bildaufnahme (I) von einem Gegenstand (O), wobei der Gegenstand (O) einen optisch lesbaren Code umfasst, wobei der optisch lesbare Code in eine Oberfläche des Gegenstands (O) eingebracht ist,
- Identifizieren des Gegenstands (O) auf Basis der ersten Bildaufnahme (I),
- Auslesen von Transformationsparametern (TP) für den identifizierten Gegenstand (O) aus einer Datenbank (DB),
- Transformieren der ersten Bildaufnahme (I) und/oder einer zweiten Bildaufnahme des Gegenstands (O) auf Basis der Transformationsparameter (TP), wobei eine transformierte Bildaufnahme (I*) erhalten wird, wobei das Transformieren der ersten Bildaufnahme (I) und/oder der zweiten Bildaufnahme ein oder mehrere der folgenden Schritte umfasst:

◦ Reduzieren von Verzerrungen und/oder Verzeichnungen des in der ersten und/oder zweiten Bildaufnahme abgebildeten optisch lesbaren Codes,
◦ Reduzieren von Reflexionen in der ersten und/oder zweiten Bildaufnahme,
◦ Erhöhen des Kontrasts des in der ersten und/oder zweiten Bildaufnahme abgebildeten optisch lesbaren Codes gegenüber der Umgebung des optisch lesbaren Codes,

- Dekodieren des in der transformierten Bildaufnahme (I*) abgebildeten optisch lesbaren Codes, wobei die Transformationsparameter (TP) empirisch ermittelt wurden, wobei bei der empirischen Ermittlung diejenigen Transformationsparameter ausgewählt wurden, bei denen das Auslesen eines optisch lesbaren Codes in einer transformierten Bildaufnahme zu weniger Dekodierfehlern führt, als das Auslesen des optisch lesbaren Codes in der nicht-transformierten Bildaufnahme.

2.    Verfahren gemäß Anspruch 1, wobei es sich bei dem Gegenstand (O) um ein pflanzliches oder tierisches Erzeugnis handelt.

3.    Verfahren gemäß Anspruch 2, wobei es sich bei dem Gegenstand (O) um ein pflanzliches Erzeugnis handelt, wobei der optisch lesbare Code in eine Schale des pflanzlichen Erzeugnisses eingebracht ist.

4.    Verfahren gemäß Anspruch 1, wobei es sich bei dem Gegenstand (O) um ein Arzneimittel handelt.

5.    Verfahren gemäß einem der Ansprüche 1 bis 4, wobei der optisch lesbare Code mittels eines Lasers in die Oberfläche des Gegenstands (O) eingebracht worden ist.

6.    Verfahren gemäß einem der Ansprüche 1 bis 5, wobei es sich bei dem optischen Code um einen Strichcode oder einen Matrixcode handelt.

7.    Verfahren gemäß einem der Ansprüche 1 bis 5, wobei es sich bei dem optischen Code um alphanumerische Zeichen handelt.

8.  Verfahren gemäß einem der Ansprüche 1 bis 7, wobei der Gegenstand (O) anhand von charakteristischen Merkmalen, die in der ersten Bildaufnahme (I) abgebildet sind, identifiziert wird.

9.  Verfahren gemäß einem der Ansprüche 1 bis 7, wobei das Identifizieren des Gegenstands (O) mit Hilfe eines trainierten Modells des maschinellen Lernens erfolgt, wobei das Modell des maschinellen Lernens auf Basis von Trainingsdaten trainiert worden ist, eine Bildaufnahme einem Gegenstand zuzuordnen, wobei die Trainingsdaten für jeden Gegenstand einer Vielzahl von Gegenstand umfasst: i) mindestens eine Bildaufnahme des Gegenstands und ii) eine Information, welcher Gegenstand in der Bildaufnahme abgebildet ist.

10. Verfahren gemäß Anspruch 9, wobei das Trainieren des Modells des maschinellen Lernens umfasst:

    - Eingeben der Bildaufnahme eines Gegenstands in das Modell des maschinellen Lernens,
    - Empfangen von Ausgabedaten von dem Modell des maschinellen Lernens,
    - Berechnen einer Abweichung zwischen den Ausgabedaten und der Information, welcher Gegenstand in der Bildaufnahme abgebildet ist, mit Hilfe einer Fehlerfunktion,
    - Modifizieren von Parametern des Modells des maschinellen Lernens im Hinblick auf eine Reduzierung der Abweichung,
    - Speichern des trainierten Modells des maschinellen Lernens in einem Datenspeicher.

11. System (1) umfassend mindestens einen Prozessor (11), wobei der Prozessor (11) konfiguriert ist,

    - eine erste Bildaufnahme (I) von einem Gegenstand (O) zu empfangen, wobei der Gegenstand (O) einen optisch lesbaren Code umfasst, wobei der optisch lesbare Code in eine Oberfläche des Gegenstands (O) eingebracht ist,
    - den Gegenstand (O), der in einer ersten Bildaufnahme (I) abgebildet ist, zu identifizieren,
    - aus einer Datenbank (DB) Transformationsparameter (TP) für den identifizierten Gegenstand (O) auszulesen,
    - die erste Bildaufnahme (I) und/oder eine zweite Bildaufnahme des Gegenstands (O) gemäß den Transformationsparametern (TP) zu transformieren, wobei eine transformierte Bildaufnahme (I*) erhalten wird, wobei das Transformieren der ersten Bildaufnahme (I) und/oder der zweiten Bildaufnahme ein oder mehrere der folgenden Schritte umfasst:

        ◦ Reduzieren von Verzerrungen und/oder Verzeichnungen des in der ersten und/oder zweiten Bildaufnahme abgebildeten optisch lesbaren Codes,
        ◦ Reduzieren von Reflexionen in der ersten und/oder zweiten Bildaufnahme,
        ◦ Erhöhen des Kontrasts des in der ersten und/oder zweiten Bildaufnahme abgebildeten optisch lesbaren Codes gegenüber der Umgebung des optisch lesbaren Codes,

    - den in der transformierten Bildaufnahme (I*) abgebildeten optisch lesbaren Code zu dekodieren,

    wobei die Transformationsparameter (TP) empirisch ermittelt wurden, wobei bei der empirischen Ermittlung diejenigen Transformationsparameter ausgewählt wurden, bei denen das Auslesen eines optisch lesbaren Codes in einer transformierten Bildaufnahme zu weniger Dekodierfehlern führt, als das Auslesen des optisch lesbaren Codes in der nicht-transformierten Bildaufnahme.

12. Computerprogrammprodukt umfassend einen Datenträger, auf dem ein Computerprogramm (16) gespeichert ist, wobei das Computerprogramm (16) in einen Arbeitsspeicher (15) eines Computersystems (10) geladen werden kann und dort das Computersystem (10) dazu veranlasst, folgende Schritte ausführen:

    - Empfangen einer ersten Bildaufnahme (I) von einem Gegenstand (O), wobei der Gegenstand (O) einen optisch lesbaren Code umfasst, wobei der optisch lesbare Code in eine Oberfläche des Gegenstands (O) eingebracht ist,
    - Identifizieren des Gegenstands (O) auf Basis der ersten Bildaufnahme (I),
    - Auslesen von Transformationsparametern (TP) für den identifizierten Gegenstand (O) aus einer Datenbank (DB),
    - Transformieren der ersten Bildaufnahme (I) und/oder einer zweiten Bildaufnahme des Gegenstands (O) auf Basis der Transformationsparameter (TP), wobei eine transformierte Bildaufnahme (I*) erhalten wird, wobei das Transformieren der ersten Bildaufnahme (I) und/oder der zweiten Bildaufnahme ein oder mehrere der folgenden Schritte umfasst:

○ Reduzieren von Verzerrungen und/oder Verzeichnungen des in der ersten und/oder zweiten Bildaufnahme abgebildeten optisch lesbaren Codes,
○ Reduzieren von Reflexionen in der ersten und/oder zweiten Bildaufnahme,
○ Erhöhen des Kontrasts des in der ersten und/oder zweiten Bildaufnahme abgebildeten optisch lesbaren Codes gegenüber der Umgebung des optisch lesbaren Codes,

- Dekodieren des in der transformierten Bildaufnahme abgebildeten optisch lesbaren Codes,

wobei die Transformationsparameter (TP) empirisch ermittelt wurden, wobei bei der empirischen Ermittlung diejenigen Transformationsparameter ausgewählt wurden, bei denen das Auslesen eines optisch lesbaren Codes in einer transformierten Bildaufnahme zu weniger Dekodierfehlern führt, als das Auslesen des optisch lesbaren Codes in der nicht-transformierten Bildaufnahme.

## Claims

1. Computer-implemented method comprising the steps of

   - receiving a first image recording (I) of an object (O), wherein the object (O) comprises an optically readable code, wherein the optically readable code is introduced into a surface of the object (O),
   - identifying the object (O) on the basis of the first image recording (I),
   - reading out transformation parameters (TP) for the identified object (O) from a database (DB),
   - transforming the first image recording (I) and/or a second image recording of the object (O) on the basis of the transformation parameters (TP), wherein a transformed image recording (I*) is obtained, wherein transforming the first image recording (I) and/or the second image recording comprises one or more of the following steps:

     ○ reducing distortions of the optically readable code imaged in the first and/or second image recording,
     ○ reducing reflections in the first and/or second image recording,
     ○ increasing the contrast of the optically readable code imaged in the first and/or second image recording with respect to the surroundings of the optically readable code,

   - decoding the optically readable code imaged in the transformed image recording (I*),

   wherein the transformation parameters (TP) were determined empirically, wherein during the empirical determination those transformation parameters were selected for which reading out an optically readable code in a transformed image recording leads to fewer decoding errors than reading out the optically readable code in the non-transformed image recording.

2. Method according to Claim 1, wherein the object (O) is a plant or animal product.

3. Method according to Claim 2, wherein the object (O) is a plant product, wherein the optically readable code is introduced into a skin of the plant product.

4. Method according to Claim 1, wherein the object (O) is a medicament.

5. Method according to any of Claims 1 to 4, wherein the optically readable code has been introduced into the surface of the object (O) by means of a laser.

6. Method according to any of Claims 1 to 5, wherein the optical code is a barcode or a matrix code.

7. Method according to any of Claims 1 to 5, wherein the optical code is alphanumeric characters.

8. Method according to any of Claims 1 to 7, wherein the object (O) is identified on the basis of characteristic features imaged in the first image recording (I).

9. Method according to any of Claims 1 to 7, wherein the object (O) is identified with the aid of a trained machine learning model, wherein the machine learning model has been trained on the basis of training data to assign an image recording to an object, wherein the training data for each object of a multiplicity of objects comprise: i) at least one image recording of the object and ii) information regarding what object is imaged in the image recording.

10. Method according to Claim 9, wherein the training of the machine learning model comprises:

- inputting the image recording of an object into the machine learning model,
- receiving output data from the machine learning model,
- calculating a deviation between the output data and the information regarding what object is imaged in the image recording, with the aid of a loss function,
- modifying parameters of the machine learning model in regard to reducing the deviation,
- storing the trained machine learning model in a data storage medium.

11. System (1) comprising at least one processor (11), wherein the processor (11) is configured

- to receive a first image recording (I) of an object (O), wherein the object (O) comprises an optically readable code, wherein the optically readable code is introduced into a surface of the object (O),
- to identify the object (O) imaged in a first image recording (I),
- to read out transformation parameters (TP) for the identified object (O) from a database (DB),
- to transform the first image recording (I) and/or a second image recording of the object (O) according to the transformation parameters (TP), wherein a transformed image recording (I*) is obtained, wherein transforming the first image recording (I) and/or the second image recording comprises one or more of the following steps:

  ∘ reducing distortions of the optically readable code imaged in the first and/or second image recording,
  ∘ reducing reflections in the first and/or second image recording,
  ∘ increasing the contrast of the optically readable code imaged in the first and/or second image recording with respect to the surroundings of the optically readable code,

- to decode the optically readable code imaged in the transformed image recording (I*),

wherein the transformation parameters (TP) were determined empirically, wherein during the empirical determination those transformation parameters were selected for which reading out an optically readable code in a transformed image recording leads to fewer decoding errors than reading out the optically readable code in the non-transformed image recording.

12. Computer program product comprising a data carrier on which a computer program (16) is stored, wherein the computer program (16) can be loaded into a main memory (15) of a computer system (10), where it causes the computer system (10) to execute the following steps:

- receiving a first image recording (I) of an object (O), wherein the object (O) comprises an optically readable code, wherein the optically readable code is introduced into a surface of the object (O),
- identifying the object (O) on the basis of the first image recording (I),
- reading out transformation parameters (TP) for the identified object (O) from a database (DB),
- transforming the first image recording (I) and/or a second image recording of the object (O) on the basis of the transformation parameters (TP), wherein a transformed image recording (I*) is obtained, wherein transforming the first image recording (I) and/or the second image recording comprises one or more of the following steps:

  ∘ reducing distortions of the optically readable code imaged in the first and/or second image recording,
  ∘ reducing reflections in the first and/or second image recording,
  ∘ increasing the contrast of the optically readable code imaged in the first and/or second image recording with respect to the surroundings of the optically readable code,

- decoding the optically readable code imaged in the transformed image recording,

wherein the transformation parameters (TP) were determined empirically, wherein during the empirical determination those transformation parameters were selected for which reading out an optically readable code in a transformed image recording leads to fewer decoding errors than reading out the optically readable code in the non-transformed image recording.

**Revendications**

1. Procédé mis en œuvre par ordinateur, comprenant les étapes consistant à

   - recevoir une première image capturée (I) d'un objet (O), l'objet (O) comprenant un code optiquement lisible, le code optiquement lisible étant intégré dans une surface de l'objet (O),
   - identifier l'objet (O) sur la base de la première image capturée (I),
   - lire dans une base de données (DB) des paramètres de transformation (TP) pour l'objet identifié (O),
   - transformer la première image capturée (I) et/ou une deuxième image capturée de l'objet (O) sur la base des paramètres de transformation (TP), une image capturée transformée (I\*) étant obtenue, la transformation de la première image capturée (I) et/ou de la deuxième image capturée comprenant une ou plusieurs des étapes suivantes :

     o réduire les distorsions et/ou les déformations du code optiquement lisible représenté dans la première et/ou la deuxième image capturée,
     o réduire les réflexions dans la première et/ou la deuxième image capturée,
     o augmenter le contraste du code optiquement lisible représenté dans la première et/ou la deuxième image capturée par rapport à l'environnement du code optiquement lisible,

   - décoder le code optiquement lisible représenté dans l'image capturée transformée (I\*),

   les paramètres de transformation (TP) ayant été déterminés empiriquement, dans lequel, lors de la détermination empirique, ont été sélectionnés ceux des paramètres de transformation pour lesquels la lecture d'un code optiquement lisible dans une image capturée transformée conduit à moins d'erreurs de décodage que la lecture du code optiquement lisible dans l'image capturée non transformée.

2. Procédé selon la revendication 1, dans lequel l'objet (O) est un produit végétal ou animal.

3. Procédé selon la revendication 2, dans lequel l'objet (O) est un produit végétal, le code optiquement lisible étant introduit dans une coque du produit végétal.

4. Procédé selon la revendication 1, dans lequel l'objet (O) est un médicament.

5. Procédé selon l'une quelconque des revendications 1 à 4, dans lequel le code optiquement lisible a été introduit dans la surface de l'objet (O) au moyen d'un laser.

6. Procédé selon l'une quelconque des revendications 1 à 5, dans lequel le code optique est un code à barres ou un code matriciel.

7. Procédé selon l'une quelconque des revendications 1 à 5, dans lequel le code optique est constitué de caractères alphanumériques.

8. Procédé selon l'une quelconque des revendications 1 à 7, dans lequel l'objet (O) est identifié sur la base de caractéristiques reproduites dans la première image capturée (I).

9. Procédé selon l'une quelconque des revendications 1 à 7, dans lequel l'identification de l'objet (O) est effectuée à l'aide d'un modèle d'apprentissage automatique entraîné, le modèle d'apprentissage automatique ayant été entraîné sur la base de données d'entraînement pour associer une image capturée à un objet, les données d'entraînement comprenant, pour chaque objet d'une pluralité d'objets : i) au moins une image capturée de l'objet et ii) une information indiquant quel objet est reproduit dans l'image capturée.

10. Procédé selon la revendication 9, dans lequel l'entraînement du modèle d'apprentissage automatique comprend :

    - la fourniture en entrée de l'image capturée d'un objet au modèle d'apprentissage automatique,
    - la réception de données de sortie en provenance du modèle d'apprentissage automatique,
    - le calcul, à l'aide d'une fonction d'erreur, d'un écart entre les données de sortie et l'information indiquant quel objet est reproduit dans l'image capturée,
    - la modification des paramètres du modèle d'apprentissage automatique en vue de réduire l'écart,

- le stockage du modèle d'apprentissage automatique entraîné dans une mémoire de données.

11. Système (1) comprenant au moins un processeur (11), ledit processeur (11) étant configuré pour

- recevoir une première image capturée (I) d'un objet (O), l'objet (O) comprenant un code optiquement lisible, le code optiquement lisible étant intégré dans une surface de l'objet (O),
- identifier l'objet (O) reproduit dans une première image capturée (I),
- lire dans une base de données (DB) des paramètres de transformation (TP) pour l'objet identifié (O),
- transformer la première image capturée (I) et/ou une deuxième image capturée de l'objet (O) sur la base des paramètres de transformation (TP), une image capturée transformée (I*) étant obtenue, la transformation de la première image capturée (I) et/ou de la deuxième image capturée comprenant une ou plusieurs des étapes suivantes :

  o réduire les distorsions et/ou les déformations du code optiquement lisible représenté dans la première et/ou la deuxième image capturée,
  o réduire les réflexions dans la première et/ou la deuxième image capturée,
  o augmenter le contraste du code optiquement lisible représenté dans la première et/ou la deuxième image capturée par rapport à l'environnement du code optiquement lisible,

- décoder le code optiquement lisible représenté dans l'image capturée transformée (I*),

les paramètres de transformation (TP) ayant été déterminés empiriquement, dans lequel, lors de la détermination empirique, ont été sélectionnés ceux des paramètres de transformation pour lesquels la lecture d'un code optiquement lisible dans une image capturée transformée conduit à moins d'erreurs de décodage que la lecture du code optiquement lisible dans l'image capturée non transformée.

12. Produit de programme informatique, comprenant un support de données sur lequel est stocké un programme informatique (16), le programme informatique (16) pouvant être chargé dans une mémoire vive (15) d'un système informatique (10) et y amenant le système informatique (10) à exécuter les étapes suivantes consistant à :

- recevoir une première image capturée (I) d'un objet (O), l'objet (O) comprenant un code optiquement lisible, le code optiquement lisible étant intégré dans une surface de l'objet (O),
- identifier l'objet (O) sur la base de la première image capturée (I),
- lire dans une base de données (DB) des paramètres de transformation (TP) pour l'objet identifié (O),
- transformer la première image capturée (I) et/ou une deuxième image capturée de l'objet (O) sur la base des paramètres de transformation (TP), une image capturée transformée (I*) étant obtenue, la transformation de la première image capturée (I) et/ou de la deuxième image capturée comprenant une ou plusieurs des étapes suivantes :

  o réduire les distorsions et/ou les déformations du code optiquement lisible représenté dans la première et/ou la deuxième image capturée,
  o réduire les réflexions dans la première et/ou la deuxième image capturée,
  o augmenter le contraste du code optiquement lisible représenté dans la première et/ou la deuxième image capturée par rapport à l'environnement du code optiquement lisible,

- décoder le code optiquement lisible représenté dans l'image capturée transformée (I*),

les paramètres de transformation (TP) ayant été déterminés empiriquement, dans lequel, lors de la détermination empirique, ont été sélectionnés ceux des paramètres de transformation pour lesquels la lecture d'un code optiquement lisible dans une image capturée transformée conduit à moins d'erreurs de décodage que la lecture du code optiquement lisible dans l'image capturée non transformée.

Fig. 1

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2585938 A
- WO 2020119301 A1
- EP 3640901 A1
- EP 3896629 A1
- EP 2281468 A1
- WO 2015117438 A1
- WO 2015117541 A1
- WO 2016118962 A1
- WO 2016118973 A1
- DE 102005019008 A
- WO 2007130968 A2
- US 5660747 A
- EP 1737306 A2
- US 10481589 B
- US 20080124433 A

**In der Beschreibung aufgeführte Nicht-Patentliteratur**

- **E. ETXEBERRIA et al.** Anatomical and Morphological Characteristics of Laser Etching Depressions for Fruit Labeling. *HortTechnology*, 2006, vol. 16
- **CHRISTOPHER CUMO**. Encyclopedia of Cultivated Plants: From Acacia to Zinnia. *ABC-CLIO*, 2013, vol. 1-3, ISBN 9781598847758
- **B. F. SULTANA et al.** Advancements in Image Classification using Convolutional Neural Network. *arXiv:1905.03288v1 [cs.CV*, 2019
- **A. KHAN et al.** A Survey of the Recent Architectures of Deep Convolutional Neural Networks. *Artificial Intelligence Review*, https://doi.org/10.1007/s10462-020-09825-6